# EUROPÄISCHE PATENTANMELDUNG

(11) **EP 1 821 297 A2**
(43) Veröffentlichungstag der Anmeldung: **22.08.2007**
(21) Anmeldenummer: 07001352.9
(22) Anmeldetag: 23.01.2007
(51) Int. Cl.: G11B 7/08, G11B 23/36

(54) **Laufwerk für einen wechselbaren Datenträger**

(30) Priorität: 18.02.2006 DE 102006007667
(71) Anmelder: Bayerische Motoren Werke Aktiengesellschaft, 80809 München (DE)
(72) Erfinder: Arenz, Dirk, 80636 München (DE)

(57) **Zusammenfassung**

Ein Laufwerk (10) für einen wechselbaren Datenträger (11), dessen Oberfläche zum Auslesen von auf dem Datenträger gespeicherten Daten durch eine Leseeinheit abtastbar ist, weist eine nicht zu dem Datenträger gehörige Referenzoberfläche (1a) auf, die zu Referenzzwecken durch die Leseeinheit abtastbar ist.

## Beschreibung

Die Erfindung betrifft ein Laufwerk für einen wechselbaren Datenträger, dessen Oberfläche zum Auslesen von auf dem Datenträger gespeicherten Daten durch eine Leseeinheit abtastbar ist.

Zum Überprüfen und Referenzieren von CD-Laufwerken wird häufig eine so genannte Referenz-CD verwendet (z. B. ABEX Test-CD von Almedio Inc.). Die Referenz-CD wird dabei zu Prüf- bzw. Referenzzwecken temporär anstelle eines Nutzdatenträgers in das Laufwerk eingelegt.

Eine Referenz-CD kann bestimmte charakteristische Fehler enthalten (z.B. Kratzer, Fingerabdrücke, Beläge, Krümmungen etc.). Die charakteristischen Fehler sind dabei typischerweise so gewählt und vorgesehen, dass sie bestimmten Anforderungen an die Fehlertoleranz bzw. Robustheit des Laufwerks entsprechen. Eine Anforderung an das Laufwerk kann beispielsweise darin bestehen, Datenträger trotz des Vorhandenseins von Fehlern, die innerhalb bestimmter Fehlergrenzen (z.B. Kratzer mit einer Breite bis zu 1,6 mm) liegen, noch abzuspielen zu können. Dementsprechend können auf der Referenz-CD Fehler vorgesehen sein, die solchen Fehlergrenzen entsprechen (z.B. Kratzer der Breite 1,6 mm).

Ziel einer Überprüfung eines Laufwerks unter Verwendung einer Referenz-CD kann es sein, herauszufinden, ob eine entdeckte Fehlfunktion auf einen Defekt des Laufwerks oder auf einen Defekt des Datenträgers zurückzuführen ist. Spielt das Laufwerk die Referenz-CD fehlerfrei ab, kann ein Laufwerksdefekt, z.B. eine übermäßige Trübung der Laserlinse, mit hoher Wahrscheinlichkeit ausgeschlossen werden.

Die Referenz-CD muss vor jeder Überprüfung bzw. Referenzierung in das zu überprüfende Laufwerk eingelegt werden. Dies kann, ebenso wie die Lagerung und Aufbewahrung der Referenz-CD zwischen ihren Einsätzen, zu Abnutzungserscheinungen, etwa infolge von Umwelteinflüssen, führen. Das normierte Fehlerbild der Referenz-CD kann durch solche Abnutzungserscheinungen verfälscht werden. Um tatsächlich ein normiertes Fehlerbild zur Verfügung zu stellen, ist es somit notwendig, die Referenz-CD in regelmäßigen Zeitabständen zu erneuern. Dadurch werden jedoch Kosten und Zeitaufwand verursacht. Zudem ist die Referenz-CD für eine ständige Verfügbarkeit in der Umgebung des Laufwerks bereitzuhalten, was insbesondere bei Laufwerken in Kraftfahrzeugen oft umständlich ist.

Aufgabe der Erfindung ist es, eine Vorrichtung zu schaffen, die eine einfache und komfortable Überprüfung bzw. Referenzierung eines Laufwerks erlaubt.

Gelöst wird diese Aufgabe durch ein Laufwerk mit den Merkmalen des Anspruchs 1. Vorteilhafte Ausführungsformen und Weiterbildungen der Erfindung ergeben sich aus den abhängigen Ansprüchen.

Erfindungsgemäß weist das Laufwerk eine nicht zu einem eingelegten Datenträger gehörige Referenzoberfläche auf, die zu Referenzzwecken durch die Leseeinheit des Laufwerks abtastbar ist. Die Referenzoberfläche wird also als fester Bestandteil in das Laufwerk integriert.

Die Referenzoberfläche ist somit ständig verfügbar, ohne außerhalb des Laufwerks bereitgehalten werden zu müssen. Auch wird die Referenzoberfläche nicht durch Umwelteinflüsse abgenutzt, da sie im Laufwerksinneren angeordnet ist.

Die Abtastung der Oberfläche eines eingelegten Datenträgers bzw. der Referenzoberfläche durch die Leseeinheit erfolgt vorzugsweise berührungslos. Gemäß einer besonders bevorzugten Ausführungsform der vorliegenden Erfindung erfolgt die Abtastung auf Laserbasis. Die Erfindung ist jedoch auch auf Laufwerke anwendbar, welche die Oberfläche eines eingelegten Datenträgers bzw. der Referenzoberfläche nicht berührungslos, sondern beispielsweise mechanisch abtasten.

Die Erfindung ist insbesondere anwendbar auf kreisscheibenförmige Datenträger, wie etwa CDs oder DVDs.

Bei einer ersten Variante der Erfindung ist die Referenzoberfläche auf der der Leseeinheit zugewandten Seite eines Laufwerkstellers angeordnet.

Im Folgenden wird ohne Beschränkung der Allgemeinheit davon ausgegangen, dass ein in das Laufwerk eingelegter Datenträger zwischen einem Drehteller und einem Halteteller gehalten wird und die Leseeeinheit des Laufwerks auf der Seite des Haltetellers angeordnet ist. Eine erfindungsgemäße Lösung ergibt sich jedoch analog auch für einen anderen Aufbau des Laufwerks.

Wenn die Leseeeinheit des Laufwerks auf der Seite des Haltetellers angeordnet ist, ist die Referenzoberfläche auf dem Drehteller angeordnet, der zum Drehen eines eingelegten Datenträgers vorgesehen ist. Um eine Referenzoberfläche aufzuweisen, wird der Drehteller ganz oder teilweise mit CD-ähnlichen Strukturen versehen, die charakteristische Fehler enthalten. Die Referenzoberfläche kann beispielsweise durch eine spezielle Bearbeitung oder durch eine spezielle Beschichtung des Drehtellers hergestellt werden. Denkbar ist auch eine dauerhafte Anbringung eines kreisscheibenförmigen (letztlich einem Referenz-Datenträger gemäß dem Stand der Technik ähnlichen) Anbauteils an der Oberfläche des Drehtellers.

Die obigen Ausführungen beziehen sich auf den Fall, dass die Leseeeinheit des Laufwerks auf der Seite des Haltetellers angeordnet ist. Wenn hingegen die Leseeeinheit des Laufwerks auf der Seite des Drehtellers angeordnet ist, muss die Referenzoberfläche entsprechend auf dem Halteteller angeordnet sein. Es muss dann zudem durch einen geeigneten Mechanismus sichergestellt werden, dass der Halteteller - entsprechend einem eingelegten Datenträger - in Rotation versetzt wird. Dies kann durch einen eigenen Antrieb des Haltetellers oder durch ein Anpressen des Haltetellers auf den Drehteller geschehen.

Um die notwendigen Abmessungen zu erreichen, die das Vorsehen einer geeigneten Referenzoberfläche erlauben, kann es je nach Ausführungsform erforderlich sein, den Dreh- bzw. Halteteller gegenüber dem Stand der Technik zu vergrößern. Die Referenzoberfläche auf dem Dreh- bzw. Halteteller kann dann in etwa - gegebenenfalls auch exakt - die Abmessungen des Datenbereichs eines Datenträgers besitzen.

Befindet sich ein Datenträger im Laufwerk, so ist die Referenzoberfläche bei der ersten Variante der Erfindung durch den Datenträger verdeckt und somit nicht nutzbar. Wird der Datenträger jedoch entnommen, so kann die Leseeinheit des Laufwerks die Referenzoberfläche abtasten. Es kann somit bei "entladenem" Laufwerk eine Überprüfung bzw. Referenzierung des Laufwerks vorgenommen werden.

Bei einer zweiten Variante der Erfindung ist die interne Referenzoberfläche auch dann durch die Leseeinheit abtastbar, wenn ein Datenträger ins Laufwerk eingelegt ist. Sie kann dann beispielsweise routinemäßig bei jedem Aufstarten des Laufwerks zur Überprüfung bzw. Referenzierung abgetastet werden. Die zweite Variante der Erfindung setzt eine in hohem Maße bewegliche Leseeinheit voraus, die beispielsweise geeignet ist, ganz oder teilweise auf die Seite eines rotierbaren Laufwerkstellers bewegt zu werden, die im Normalbetrieb von der Leseeinheit abgewandt ist. Die Referenzoberfläche könnte dann auf der abgewandten Seite des Laufwerkstellers angeordnet sein. Zur Abtastung der Referenzoberfläche kann die Leseeinheit dann ganz oder teilweise auf diese Seite des Laufwerksteller bewegt werden, auch wenn auf der anderen (im Normalbetrieb der Leseeinheit zugewandten) Seite des Laufwerkstellers ein Datenträger aufliegt.

Vorzugsweise ist die Leseeinheit und/oder die Referenzoberfläche in solcher Art und Weise beweglich ausgeführt, dass der Leseabstand und/oder der Lesewinkel zwischen Leseeinheit und Referenzoberfläche so einstellbar sind, dass sie dem Leseabstand und/oder dem Lesewinkel zwischen der Leseeinheit und einem eingelegten Datenträger entsprechen. Da die Leseeinheit des Laufwerks beispielsweise bei der ersten Variante der Erfindung in der Regel von der Referenzoberfläche des Laufwerkstellers weiter entfernt ist als von der Oberfläche eines auf dem Laufwerksteller aufliegenden Datenträgers, ist gemäß einer Weiterbildung dieser Variante der Erfindung ein Mechanismus vorgesehen, der diesen Unterschied ausgleicht und somit Verfälschungen bei der Überprüfung bzw. Referenzierung vermeidet. Hierzu kann der Laufwerksteller beispielsweise generell immer dann leicht an die Leseeinheit angenähert werden, wenn das Laufwerk geschlossen wird, ohne dass ein Datenträger eingelegt wird. Zum Ausgleich des unterschiedlichen Leseabstands muss die Annäherungsdistanz in etwa der Dicke eines Datenträgers entsprechen. Die Annäherung kann auch erst dann ausgelöst werden, wenn - etwa anhand eines Analysebefehls - ersichtlich ist, dass eine Überprüfung bzw. Referenzierung vorgenommen werden soll. Statt einer Annäherung des Drehtellers an die Leseeinheit kann auch die Leseeinheit an den Drehteller angenähert werden, um den Leseabstand zu korrigieren. Die Annäherung kann beispielsweise motorisch oder über einen Federmechanismus realisiert werden.

Denkbar sind auch Ausführungsformen der Erfindung, bei welchen ein eingelegter Datenträger zu Beginn einer Überprüfung bzw. Referenzierung - beispielsweise ausgelöst durch einen Analysebefehl - ohne manuellen Benutzereingriff (beispielsweise durch einen Transport-Mechanismus des Laufwerks) von seiner vorgesehenen Nutzposition entfernt wird, um die Referenzoberfläche für die Leseeinheit abtastbar zu machen. Vorteilhaft ist dies insbesondere als Weiterbildung der ersten Variante der Erfindung, da bei dieser ersten Variante ansonsten nur ohne eingelegten Datenträger eine Überprüfung bzw. Referenzierung möglich ist. Diese Weiterbildung ist besonders einfach realisierbar bei Laufwerken und Laufwerksvorrichtungen, die geeignet sind, mehrere Datenträger aufzunehmen und davon jeweils einen in Nutzposition zu bringen (z. B. CD-Wechsler für Audio-CDs in Kraftfahrzeugen). Der zuvor in Nutzposition befindliche Datenträger kann dann ohne manuellen Eingriff des Benutzers durch den Transport-Mechanismus des CD-Wechslers in eine ihm zugewiesene Aufbewahrungsposition im Magazin des Laufwerks bzw. der Laufwerksvorrichtung verbracht werden. Dies kann selbsttätig zu Beginn einer Überprüfung bzw. Referenzierung oder auf eine Bedienanforderung hin erfolgen. Nach der Überprüfung bzw. Referenzierung kann der Datenträger selbsttätig oder auf gesonderte Bedienanforderung hin wieder in die Nutzposition verbracht werden.

Der Datenträger muss nicht zwingend in das Magazin des Laufwerks verbracht werden. Es kann beispielsweise auch genügen, den Datenträger nur vom Drehteller abzuheben. Entscheidend ist die Zugänglichkeit und somit Abtastbarkeit der Referenzoberfläche durch die Leseeinheit. Bei Laufwerken und Laufwerksvorrichtungen, die geeignet sind, mehrere Datenträger aufzunehmen und davon jeweils einen in Nutzposition zu bringen, ist in der Regel ein geeigneter Mechanismus hierfür vorgesehen. Dieser muss lediglich durch entsprechende Steuerung zum Zweck der Erfindung nutzbar gemacht werden.

Die Erfindung ermöglicht eine einfache, stets verfügbare und komfortable Überprüfung bzw. Referenzierung eines Laufwerks. Durch die Erfindung kann vermieden werden, dass Laufwerke oder Geräte mit integriertem Laufwerk ausgetauscht, obwohl festgestellte Fehlfunktionen tatsächlich auf defekte oder inkompatible Datenträger zurückzuführen sind. Die Erfindung erübrigt zudem die in der Praxis umständliche und schwierige verschleißfreie Handhabung eines externen Referenz-Datenträgers, z.B. einer Referenz-CD.

Die obigen Ausführungen beziehen sich größtenteils auf Laufwerke für kreisscheibenförmige Datenträger wie CDs oder DVDs. Der Gedanke der Erfindung lässt sich jedoch analog auf andere Laufwerkstypen anwenden.

Anhand der beigefügten Zeichnungen wird eine bevorzugte Ausführungsform der Erfindung im Folgenden näher erläutert. Die Zeichnungen zeigen im Einzelnen
- Fig. 1: einen Datenträger gemäß dem Stand der Technik,
- Fig. 2: ein Laufwerk gemäß einer bevorzugten Ausführungsform der vorliegenden Erfindung mit eingelegtem Datenträger und
- Fig. 3: dasselbe Laufwerk ohne eingelegten Datenträger.

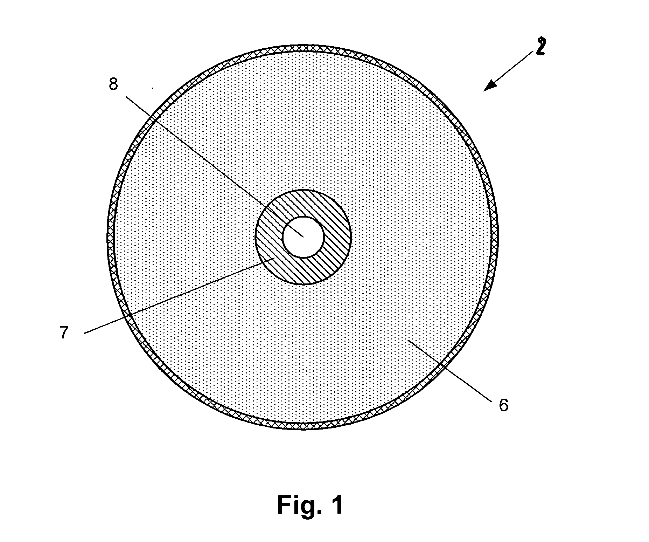

Fig. 1 zeigt einen Datenträger 11 gemäß dem Stand der Technik. Es handelt sich um eine Compact Disc (CD). Rund um die Öffnung 8 befindet sich der CD-Antriebsbereich 7. Rund um diesen erstreckt sich der CD-Optik-Bereich 6. Der Antriebsbereich 7 tritt bei gewöhnlichem Betrieb der CD 11 in einem Laufwerk in Kontakt mit einem rotierenden Antriebsteller. Die gesamte CD 11 und somit auch der CD-Optik-Bereich 6 wird dadurch in Rotation versetzt.

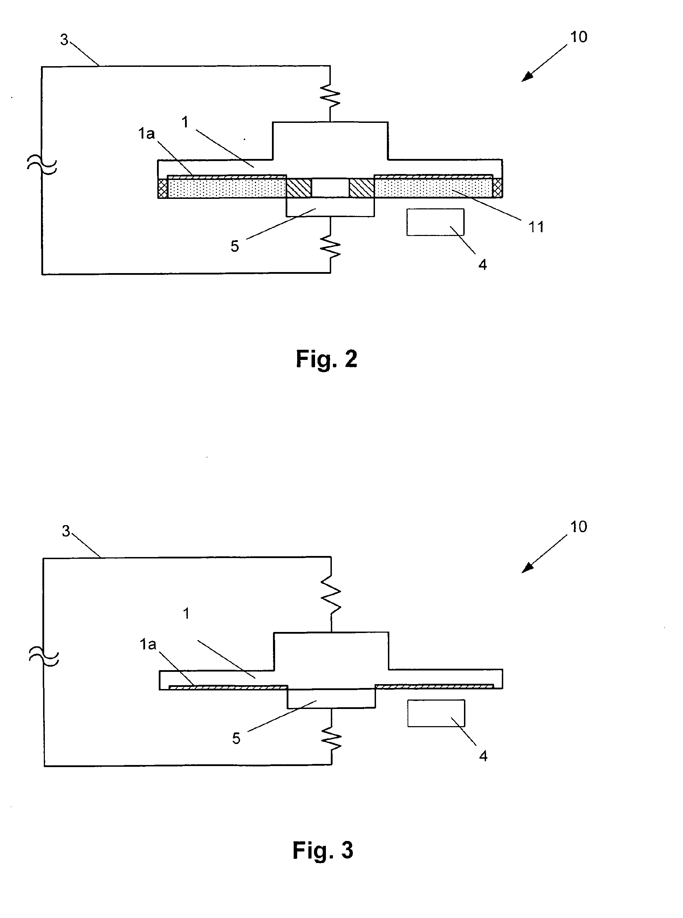

Fig. 2 zeigt einen Querschnitt durch ein Laufwerk 10 gemäß einer bevorzugten Ausführungsform der vorliegenden Erfindung mit eingelegtem Datenträger. Es handelt sich um ein CD-Laufwerk. Der Datenträger entspricht der CD 11 aus Fig. 1. Der Halteteller 1 des Laufwerks 10 ist gegenüber gewöhnlichen CD-Laufwerken im Durchmesser vergrößert. Sein Durchmesser ist so gewählt, dass der Halteteller 1 eine im Wesentlichen kreisrunde Fläche 1 a aufweist, deren Durchmesser dem Außendurchmesser der CD 11 aus Fig. 1 entspricht. In dem Flächenbereich 1a, welcher dem CD-Optikbereich 6 der CD 11 entspricht, ist der Halteteller 1 mit CD-ähnlichen Strukturen versehen. Dieser Flächenbereich 1 a ist zudem mit charakteristischen Fehlern (z. B. Kratzern) versehen und dient als Referenzoberfläche im Sinne der Erfindung. Eine Anpressmechanik 3 des Laufwerks 10 dient bei eingelegtem Datenträger 11 dazu, den Datenträger 11 zwischen einem motorisch drehbaren Antriebsteller 5 und dem Halteteller 1 festzuklemmen. Der Datenträger 11 kann dann über den Antriebsteller 5 in Rotation versetzt und durch eine Laseroptik 4 abgetastet werden.

Fig. 3 zeigt dasselbe Laufwerk 10 ohne eingelegten Datenträger 11. Erfindungsgemäß ist die Anpressmechanik 3 des Laufwerks 10 so ausgeführt, dass auch im ungeladenen Zustand (keine CD 11 im Laufwerk) der vergrößerte Halteteller 1 so weit heruntergefahren werden kann, dass er auf den Antriebsteller 5 gepresst wird. Durch diesen Kraftschluss wird der Halteteller 1 in Rotation versetzt. Durch das erweiterte Herunterfahren und die Rotation des Haltetellers 1 rotiert nun die Referenzoberfläche 1 a des Haltetellers 1 auf dem Niveau, auf dem bei eingelegtem Datenträger 11 die Oberfläche des Datenträgers 11 rotieren würde. Die Referenzfläche 1a kann somit anstelle einer CD 11 durch die Laseroptik 4 abgetastet werden.

Da die interne Referenzoberfläche 1 a durch die dauerhafte Integration in das Laufwerk 10 keinen äußeren Umwelteinflüssen wie Sonneneinstrahlung und Kratzern ausgesetzt ist, unterliegt sie einem sehr geringen bzw. verschwindenden Verschleiß.

## Patentansprüche

1. Laufwerk für einen wechselbaren Datenträger, dessen Oberfläche zum Auslesen von auf dem Datenträger gespeicherten Daten durch eine Leseeinheit abtastbar ist,
**dadurch gekennzeichnet,**
**dass** das Laufwerk eine nicht zu dem Datenträger gehörige Referenzoberfläche aufweist, die zu Referenzzwecken durch die Leseeinheit abtastbar ist.

2. Laufwerk nach Anspruch 1, **dadurch gekennzeichnet,**
**dass** die Abtastung berührungslos erfolgt.

3. Laufwerk nach einem der Ansprüche 1 oder 2, **dadurch gekennzeichnet,**
**dass** die Leseeinheit auf Laserbasis ausgebildet ist.

4. Laufwerk nach einem der Ansprüche 1 bis 3, **dadurch gekennzeichnet,**
**dass** der Datenträger im Wesentlichen kreisscheibenförmig ausgebildet ist.

5. Laufwerk nach einem der Ansprüche 1 bis 4, **dadurch gekennzeichnet,**
**dass** der Datenträger als CD oder DVD ausgebildet ist.

6. Laufwerk nach einem der Ansprüche 1 bis 5, **dadurch gekennzeichnet,**
**dass** die Referenzoberfläche auf der der Leseeinheit zugewandten Seite eines Laufwerkstellers angeordnet.

7. Laufwerk nach Anspruch 6, **dadurch gekennzeichnet,**
**dass** der Laufwerksteller zur Abtastung der Referenzoberfläche in Rotation versetzt wird.

8. Laufwerk nach einem der Ansprüche 1 bis 5, **dadurch gekennzeichnet,**
**dass** die Referenzoberfläche auf einem Halteteller angeordnet ist und die Rotation durch Anpressen auf einen Drehteller verursacht wird.

9. Laufwerk nach einem der Ansprüche 1 bis 8, **dadurch gekennzeichnet,**
**dass** der Leseabstand zwischen Leseeinheit und Referenzoberfläche so einstellbar ist, dass er dem Leseabstand zwischen der Leseeinheit und einem eingelegten Datenträger entspricht.

10. Laufwerk nach einem der Ansprüche 1 bis 9, **dadurch gekennzeichnet,**
**dass** ein eingelegter Datenträger durch einen Transport-Mechanismus des Laufwerks von seiner vorgesehenen Nutzposition entfernbar ist, um die Referenzoberfläche für die Leseeinheit abtastbar zu machen.
